# EUROPÄISCHE PATENTANMELDUNG

(11) **EP 1 037 485 A2**
(43) Veröffentlichungstag der Anmeldung: **20.09.2000**
(21) Anmeldenummer: 00104727.3
(22) Anmeldetag: 04.03.2000
(51) Int. Cl.: H04Q 7/38

(54) **Verfahren zur Ortung von mobilen Telefonen**

(30) Priorität: 15.03.1999 DE 19911240
(71) Anmelder: MAZ Mikroelektronik Anwendungszentrum Hamburg GmbH, D-21079 Hamburg (DE)
(72) Erfinder: Neuser, Horst, 21079 Hamburg (DE); Klook, Thorsten, 21220 Seevetal (DE)
(74) Vertreter: DIEHL GLAESER HILTL & PARTNER

(57) **Zusammenfassung**

Die Erfindung bezieht sich auf ein Verfahren zur Ortung von mobilen Telefonen, bei welchem Mobilfunk-Messeinheiten zellular verteilt und in sicheren Gehäusen, wie Sprechstellen untergebracht werden. Von einer Vielzahl der Mobilfunk-Messeinheiten werden elektromagnetische Signale in den Frequenzbereichen von Mobilfunkgeräten empfangen, nach den Parametern für Mobiltelefonsendesignale geprüft und bei Übereinstimmung der gemessene Empfangspegel über ein Interface an einen Verarbeitungscomputer übermittelt.

## Beschreibung

Die Zahl der Mobilfunkteilnehmer hat in den letzten Jahren weltweit einen rasanten Zuwachs erhalten und wird auch weiter stark ansteigen. "Telefonieren (fast) überall" birgt jedoch Gefahren durch die Technik im und um das Mobiltelefon (Handy) oder durch missbräuchlichen Einsatz.

Handys können zum Abhören und Weiterleiten vertraulicher Gespräche missbraucht werden.
Stichwort: Vertraulichkeit.

Handys können zur unerlaubten Übertragung von gespeicherten Daten verwendet werden.
Stichwort: Industriespionage.

Handys können zur Organisation und als Hilfsmittel zur Ausführung von Verbrechen verwendet werden.
Stichwort: Rauschgifthandel.

Unerlaubter Handygebrauch stellt vor allem für den Untersuchungshaft-Bereich ein gravierendes Problem für die Strafverfolgung dar. Es muss vermieden werden, dass Prozessergebnisse durch Zeugenbeeinflussung, Absprachen über Aussagen usw. durch die Benutzung von Mobilfunktelefonen manipuliert werden.

Handygebrauch stellt auch eine Sicherheitsgefährdung im Strafvollzug dar. So können unerlaubte Handlungen und Verbrechen über Mobilfunk organisiert, koordiniert und durchgeführt werden.
Stichwort: Ausbruchversuche

Die Benutzung von Mobiltelefonen kann zu ungewollten Beeinflussungen oder Störungen von elektrischen und elektronischen Geräten und Anlagen führen.
Stichwort: Elektro-Magnetische-Verträglichkeit (EMV).

Um eine Gefährdung durch den unerlaubten Einsatz von Mobiltelefonen zu vermeiden, werden derzeit unterschiedliche Maßnahmen und Systeme angewendet.

### Stand der Technik zur Verhinderung bzw. Beseitigung von Gefährdungen durch den unerlaubten Einsatz von Mobiltelefonen:

Eine einfache Variante ist das Verbotsschild oder das ausgesprochene Verbot z. B. im Flugzeug. Eine direkte Überwachung dieses Verbotes ist jedoch ohne Hilfsmittel praktisch nicht möglich.

Als weitere Möglichkeit sind Metalldetektoren und Röntgengeräte einsetzbar, wie sie z. B. in Sicherheitsschleusen auf Flughäfen verwendet werden. Damit lassen sich Mobiltelefone sicher erkennen und können ausgeschaltet oder sogar, z. B. für die Dauer des Aufenthaltes, verwahrt werden. Diese Vorgehensweise erfordert jedoch einen hohen logistischen Aufwand, ist damit sehr zeit- und somit kostenintensiv und nur selten praktikabel.

Weiter ist eine Überwachung des Handy-Verbotes mit Hilfe von elektronischen Detektoren (passive Hochfrequenzempfänger mit Schwellwertschalter) bekannt. Diese sind als mobile Geräte oder als stationäre Geräte mit optischer, akustischer oder Vibrations-Signalisierung-Alarmierung ausgestattet.

Es sind auch stationäre Handydetektoren bekannt, die durch einfache elektrische Alarmsignalisierung (Alarm / kein Alarm) z.B. durch potentialfreie Kontakte mit Kommunikationssystemen verbunden oder auch darin integriert sind.

Es gibt einfache Detektionssysteme, die die Mobilfunkfrequenzen mehr oder weniger selektiv detektieren, ohne jedoch die Struktur der Mobiltelefonsendesignale zu berücksichtigen. Bei diesen Systemen tritt das Problem auf, das andere elektronische Geräte (z. B. Transpondersysteme, Mikrowellengeräte, CD-Spieler, piezoelektrische Feuerzeuge, Radargeräte) Signale im betrachteten Frequenzbereich erzeugen können. Dies führt zu häufigen Fehlalarmen und ist für sicherheitsrelevante Ein-richtungen nicht geeignet.

Die Alternative hierzu bieten Geräte, die über eine Überwachung des Frequenzbereiches hinaus das empfangene Signal auf seine Struktur analysieren, so dass Fehlalarme nahezu ausgeschlossen werden können. Diese Geräte beschränken sich auf die Detektion digitaler Mobiltelefone, da eine solche Analyse bei analogen Geräten (C-Netz) nicht mit derselben hohen Sicherheit möglich ist.

Die bekannten Detektoren lösen bei bestimmten empfangenen elektromagnetischen Empfangsfeldstärken einen Alarm aus.

Im freien Raum sind die Beziehungen zwischen Sendeleistung, Empfangsfeldstärke und Entfernung relativ einfach über die Freiraumdämpfung in Abhängigkeit von der Frequenz berechenbar. Bei konstanter Sendeleistung ist die Entfernungsbestimmung zwischen Handy und Handydetektor möglich.

Weitaus komplizierter sind die realen Bedingungen:

Innerhalb geschlossener Räume befinden sich diverse Strukturen, die. z. B. als Sekundärstrahler wirken können. Ein metallischer Schrank, Stahlbetonwände, ein Baugerüst, Metallgitter, Heizkörper sowie aber auch die Anzahl der anwesenden Personen ändern die Verhältnisse. Mehrfachreflektionen, Absorptionen, Beugungen usw. haben erheblichen Einfluss auf das Empfangssignal. Und schließlich ist die Größe des Telefonierers durchaus von Bedeutung.

Nach Mobilfunkstandards wird die erforderliche Sendeleistung durch die jeweilige Basistation gesteuert sowie auch durch Mobiltelefonalgorithmen verändert bzw. vorgegeben. Netzabhängig sind diese Sendeleistungen unterschiedlich. Auch von Mobiltelefon-Typ zu Mobiltelefon-Typ gibt es teilweise deutliche Unterschiede im Verhalten.

Es ist mit den bekannten Handydetektoren aus den oben dargelegten Gründen, die eine feste oder voreinstellbare Auslöseempfindlichkeit haben und für einzelne oder auch zusammenhängende zellular eingeteilte örtliche Erfassungsbereiche vorgesehen sind, keine sichere Ortsbestimmung möglich.

### Die Nachteile bekannter Lösungen:

Handydetektoren, die über ein einfaches Signal an ein Überwachungssystem angeschlossen oder integriert sind, müssen abgegrenzt von benachbarten Detektoren einen fest definierten Ortsbereich detektieren. Es muss eine Schwelle dazu definiert werden, die jedoch nur unvollkommen den Bereich erfasst. Die Probleme entstehen dadurch, dass unterschiedliche Mobiltelefontypen sowie unterschiedliche Netzbetreiber variable Sendeleistungen realisieren und die Lage des Mobiltelefons nicht fixiert ist, sondern an jedem möglichen Ort innerhalb des Erfassungsbereiches in unterschiedlicher Winkellage telefoniert werden kann. Entweder die Empfindlichkeit wird so hoch eingestellt, dass benachbarte Bereiche mit erfasst werden oder sie wird ohne Bereichsüberschreitung so niedrig eingestellt, dass nicht jedes sendende Mobiltelefon im Erfassungsbereich mit Sicherheit detektiert wird.

Jeder Handydetektor muss außerdem auf den Erfassungsbereich mit den örtlichen elektromagnetischen relevanten Gegebenheiten eingestellt werden, ohne dass eine sichere bereichsweise Detektion erfolgen kann.

Die unterschiedlichen Sendeleistungen, hervorgerufen durch die verschiedenen Mobilfunk-Netze und Handy-Typen, machen eine Schwellwerteinstellung sehr kompliziert und extrem zeitaufwendig.

### Die Lösung gemäß der Erfindung:

Vorteilhaft ist es, das folgend beschriebene intelligente System, das Mobilfunk measuring System, einzusetzen:

Erfindungsgemäß werden Mobilfunk-Messeinheiten zellular verteilt z.B. in sicheren Gehäusen wie Sprechenstellen untergebracht.

Mobilfunk-Messeinheiten sind elektronische Einrichtungen, die elektromagnetische Signale in den Frequenzbereichen von Mobil-funkgeräten empfangen und nach den gültigen Parametern für Mobiltelefonsendesignale prüfen. Bei Übereinstimmungen wird der gemessene Empfangspegel über ein Interface an einen Verarbei-tungscomputer übermittelt.

Je nach Erfordernis über die Anforderungen an die Genauigkeit der Ortung von Mobiltelefonen werden eine entsprechende Anzahl von Mobilfunk-Messeinheiten in den örtlichen Erfassungsbereichen z. B. Gebäuden, Fahrzeuge, Schiffe oder sonstigen festen oder mobilen Anordnungen verteilt angeordnet.

Neben dem Vergleich von Frequenz und Parametern für Mobiltelefonsendesignale bewerten die Mobilfunk-Messeinheiten auch mögliche Mindestfeldstärkewerte, so dass nur die Feldstärke-werte, die mit Sicherheit durch sendende Mobiltelefone in der weiteren Umgebung erzeugt werden, an den Verarbeitungscomputer übermittelt werden.

Das Mobiltelefon wird nicht wie bisher durch einen Handydetektor über ein einfaches Signal (Alarm/kein Alarm) detektiert, sondern die Empfangsfeldstärken von allen in einem Mobilfunk measuring System befindlichen Mobilfunk-Messeinheiten werden an einen Messwertverarbeitungscomputer übertragen und verarbeitet.

Der Messwertverarbeitungscomputer bewertet die einzelnen Feldstärkewerte und berechnet in Verbindung mit den Anbrings-orten der Mobilfunk-Messeinheiten sowie für elektromagnetische Feldausbreitung relevanter örtlich definierter Objekte (z. B. elektromagnetische Dämpfung von Betonwänden oder z. B. reflek-tierende und abschirmende Metallkonstruktionen) den voraus-sichtlichen Ort eines oder mehrerer sendender Mobiltelefone.

Der Messwertcomputer übergibt die Informationen, insbesondere örtlicher Bereich, Zeitpunkt, Dauer der Handyaktivitäten direkt und zeitnahe an eine Überwachungszentrale.

Bei vorhandenen Kommunikationssystemen kann auch ein vom Verarbeitungscomputer generiertes Alarmsignal über das Interface mit den Mobilfunk-Messeinheiten dezentral an eine mit dem Erfassungsbereich verknüpfte Kommunikationseinheit (z.B. Sprechstelle) übermittelt werden.

### Die Vorteile der erfindungsgemäßen Lösung:

Die Mobil-Messeinheiten sind so angeordnet, dass ihr Feldstärkeerfassungsereich mit Sicherheit den vorgesehenen örtlichen Bereich überdeckt, so dass jedes sendende Mobiltelefon mindestens an einer Mobilfunk-Messeinheit einen sicheren Feldstärkewert liefert.

Im allgemeinen sind die Überdeckungen der örtlichen Bereiche so groß, dass mehrere Mobilfunk-Messeinheiten Feldstärkewerte von sendenden Mobiltelefonen liefern.

Eine zeitaufwendige und unvollkommene Empfindlichkeitseinstellung für den Aufstellungsort und Erfassungsbereich wird nicht benötigt. Es ist lediglich zu beachten, das die einzelnen Mobilfunk-Messeinheiten vom Werk aus vergleichbare Feldstärkewerte liefern (d.h. gleiche Empfindlichkeit in einem zulässigen Toleranzbereich).

Im Verarbeitungscomputer werden die einzelnen Messwerte mit den im Computer erfassten Aufstellungsorten der Mobilfunk-Messeinheiten im Zusammenhang bewertet. Daneben können Richtcharakteristiken der Mobilfunk-Messeinheiten sowie für elektromagnetische Wellenausbreitung relevante Objekte in die Berechnung einbezogen werden.

Statische Veränderungen können durch Korrekturwerteingaben in den Verarbeitungscomputer mit geringem Aufwand berücksichtigt werden.

Durch die Bewertung der relativen Feldstärkewerte der Mobilfunk-Messeinheiten zueinander werden unterschiedliche Sendeleistungen der Handys und damit unterschiedliche Feldstärkewerte, bezogen auf den gleichen Sendeort, relativiert. Damit kann das Mobilfunk measuring System unabhängig von Mobiltelefontyp und Mobilnetz eine Feldstärkeverteilung und damit eine Ortung ermöglichen.

Die Mobilfunk-Messeinheiten können in geeignete bestehende Gehäuse integriert werden. Es können externe Antennen oder auch interne Antennen angebracht werden, wenn die Gehäuse entsprechend für elektromagnetische Felder der Mobilfunkfrequenzen durchlässig sind.

Vorteilhaft ist die Möglichkeit, zentral am Verarbeitungscomputer die Mobiltelefonortung in bereits bestehende oder neue Anlagen, wie beispielsweise Gebäudemanagementsysteme, Ruf- und Lichtanlagen, Lichststeueranlagen und Lichtsysteme, Informa-tionssysteme, Verteiler, Schlüsselschalter, Flugzeugsitze, Entertainment-Systeme eines Flugzeuges. SPS-Systeme von Maschinen und Anlagen durch eine Kommunikationsschnittstelle zu übermitteln.

Vorhandene Kommunikations- oder Überwachungssysteme mit dezen-traler Verarbeitung können auf einfache Weise nachgerüstet werden, so dass ein scheinbares Handy-Detektorsignal vom Verarbeitungscomputer erzeugt wird und über die Mobilfunk-Messeinheiten örtlich zugeordnet an z. B. Sprechstellen angeschlossen wird.

Es sind Messwertübertragungsmöglichkeiten denkbar, z. B. über optische Schnittstelle, Hochfrequenz, einfach über Leitungen, Bussysteme, serielle Schnittstellen (RS 232, RS 485), parallele Schnittstellen u.ä.

Neben den Feldstärkemesswerten kann die Mobilfunk-Messeinheit Statusinformationen an den zentralen Verarbeitungscomputer übermitteln und Befehle von ihm erhalten. Bei Defekten oder Unregelmäßigkeiten kann per Ferndiagnose eine Ursachenermittlung vorgenommen und entsprechend reagiert werden.

Für Neuausrüstung und Nachrüstung vorhandener Kommunikations-systeme können vorhandene Interfaces mitgenutzt werden.

Neben der Berechnung der voraussichtlichen Bereiche sendender Möbiltelefone nach feldtheoretischen Verfahren ist auch durch Aufnahme und Verarbeitung der Feldstärkewerte von Kalibriersendern oder Testhandys bei Inbetriebnahme oder Überprüfung des Systems durch den Verarbeitungscomputer möglich. Die Ortsbestimmung wird vor allem dort, wo unbekannte elektromagnetische Objekte vorhanden sind (z.B. nicht bekanntes älteres Mauerwerk), noch genauer möglich.

## Patentansprüche

1. Verfahren zur Ortung von mobilen Telefonen, bei welchem Mobilfunk-Messeinheiten zellular verteilt und in sicheren Gehäusen, wie Sprechstellen untergebracht werden, dadurch gekennzeichnet, dass von einer Vielzahl der Mobilfunk-Messeinheiten elektromagnetische Signale in den Frequenzbereichen von Mobilfunkgeräten empfangen, nach den Parametern für Mobiltelefonsendesignale geprüft und bei Übereinstimmung der gemessene Empfangspegel über ein Interface an einen Verarbeitungscomputer übermittelt wird.

2. Verfahren nach Anspruch 1, dadurch gekennzeichnet, dass die Mobilfunk-Messeinheiten neben dem Vergleich von Frequenz und Parametern für Mobiltelefonsendesignale Mindestfeldstärkewerte bewertet werden, so dass nur die Feldstärkewerte, die mit Sicherheit durch sendende Mobiltelefone in der weiteren Umgebung erzeugt werden, an den Verarbeitungscomputer übermittelt werden.

3. Verfahren nach Anspruch 1 oder 2, dadurch gekennzeichnet, dass der Messwertverarbeitungscomputer die einzelnen Feldstärkewerte in Verbindung mit den Anbringungsorten der Mobilfunk-Messeinheiten sowie der elektromagnetischen Feldausbreitung hinsichtlich relevanter örtlich definierter Objekte (z.B. elektromagnetische Dämpfung von Betonwänden oder z. B. reflektierende und abschirmende Metallkonstruktionen) den voraussichtlichen Ort eines oder mehrerer sendender Mobiltelefone bewertet.

4. Verfahren nach mindestens einem der Ansprüche 1 bis 3, dadurch gekennzeichnet, dass über vorhandende Kommunikationssysteme ein vom Verarbeitungscomputer generiertes Alarmsignal über das Interface mit den Mobilfunk-Messeinheiten dezentral an eine mit dem Erfassungsbereich verknüpfte Kommunikationseinheit (z.B. Sprechstelle) übermittelt wird.
